# EUROPEAN PATENT APPLICATION

(11) **EP 4 769 156 A1**
(43) Date of publication of application: **01.07.2026**
(21) Application number: 25227486.5
(22) Date of filing: 29.12.2025
(51) Int. Cl.: G06F 11/3668, G06N 20/00, G06Q 10/063, G06Q 30/0201

(54) **AGENT FRAMEWORK FOR ACCELERATING EXPERIMENTATION**

(30) Priority: 30.12.2024 US 202419005278
(71) Applicant: Intuit Inc., Mountain View, CA 94043 (US)
(72) Inventor: SRIVASTAVA, Ashok, Mountain View, 94043 (US); KALLUR PALLI KUMAR, Sricharan, Mountain View, 94043 (US); SUBRAHMANIAM, Vignesh Thirukazhukundram, Mountain View, 94043 (US)
(74) Representative: D Young & Co LLP

(57) **Abstract**

A computer-implemented method involves receiving input with information about treatments for targets. A large language model (LLM) agent identifies tools for configuring treatments, selecting targets, and allocating treatments. The LLM agent generates and provides application programming interface (API) inputs to the tools. The LLM agent receives results from the tools, determines if the results satisfy a condition, and outputs an indication based on the results. The method includes generating computer code for treatments, applying treatments, and performing statistical analysis. The system iteratively adjusts treatments, targets, or allocations until conditions are met. The system identifies ambiguities and obtains clarifications, training the LLM agent accordingly. The processing system includes memory and processors to execute instructions, receive input, identify tools, generate API inputs, provide inputs to tools, receive results, determine conditions, and output indications.

## Description

### FIELD AND BACKGROUND

Aspects of the present disclosure relate to intelligent systems and machine learning platforms, particularly to methods and systems for automating and enhancing experimentation processes.

Experimentation plays a role in identifying the primary challenges faced by customers and determining the most effective solutions to address these challenges. More generally, experimentation is a technique for decision-making or process improvement in an environment of uncertainty.

### SUMMARY

Particular aspects are set out in the appended independent claims. Various optional embodiments are set out in the dependent claims.

Certain aspects provide a computer-implemented method. The method comprises receiving an input that includes information regarding a set of treatments to be applied for a set of targets. The method comprises identifying, by a large language model (LLM) agent and based on the information and descriptions of a plurality of tools, a set of tools of the plurality of tools, the set of tools including at least one of a first tool associated with configuring the set of treatments, a second tool associated with selecting the set of targets, or a third tool associated with an allocation of the set of treatments to the set of targets. The method comprises generating, by the LLM agent, a set of application programming interface (API) inputs for the set of tools according to a set of descriptions, of the descriptions, corresponding to the set of tools. The method comprises providing, by the LLM agent, the set of API inputs to the set of tools. The method comprises receiving, by the LLM agent from the set of tools, a result relating to applying one or more treatments of the set of treatments for the set of targets. The method comprises determining, by the LLM agent, that the result satisfies a condition. The method comprises outputting, by the LLM agent, an indication of the one or more treatments or the result based on the result satisfying the condition.

Certain aspects provide a method performed by an LLM agent. The method comprises receiving an input that includes information regarding a set of treatments to be applied for a set of targets. The method comprises identifying, based on the information and descriptions of a plurality of tools, a set of tools of the plurality of tools. The set of tools include a first tool associated with configuring the set of treatments, a second tool associated with selecting the set of targets, and a third tool associated with an allocation of the set of treatments to the set of targets. The method comprises generating a set of API inputs for the set of tools according to a set of descriptions, of the descriptions, corresponding to the set of tools. The method comprises providing the set of API inputs to the set of tools. The method comprises receiving, from the set of tools, a result relating to applying one or more treatments of the set of treatments for the set of targets. The method comprises outputting an indication of the one or more treatments or the result based on the result satisfying a condition.

Certain aspects provide a processing system that includes one or more memories comprising computer-executable instructions; and one or more processors configured to execute the computer-executable instruction. The one or more processors are configured to cause the processing system to receive an input that includes information regarding a set of treatments to be applied for a set of targets, the input comprising natural language. The one or more processors are configured to cause the processing system to identify, by an LLM agent of the processing system and based on the information and descriptions of a plurality of tools, a set of tools of the plurality of tools. The set of tools include at least one of a first tool associated with configuring the set of treatments, a second tool associated with selecting the set of targets, or a third tool associated with an allocation of the set of treatments to the set of targets. The one or more processors are configured to cause the processing system to generate a set of API inputs for the set of tools according to a set of descriptions, of the descriptions, corresponding to the set of tools. The one or more processors are configured to cause the processing system to provide, by the LLM agent, the set of API inputs to the set of tools. The one or more processors are configured to cause the processing system to receive, by the LLM agent from the set of tools, a result relating to applying one or more treatments of the set of treatments for the set of targets. The one or more processors are configured to cause the processing system to determine, by the LLM agent, that the result satisfies a condition. The one or more processors are configured to cause the processing system to output, by the LLM agent, an indication of the one or more treatments or the result based on the result satisfying the condition.

Other aspects provide processing systems configured to perform the aforementioned methods as well as those described herein; computer-readable media comprising (e.g. storing and/or conveying) instructions that, when executed by a processors of a processing system, cause the processing system to perform the aforementioned methods as well as those described herein; a computer program product embodied on a computer readable medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example system supporting a plurality of microservices.
**FIG. 2A** is a diagram illustrating an example of an experimentation process by a large language model (LLM) agent.
**FIGs. 2B-2D** provide further description of aspects of the example of **FIG. 2A****.**
**FIGs. 3A-3B** show a method for designing an experiment using an LLM agent.
**FIG. 4** depicts an example method for designing experimentation using an LLM agent.
**FIG. 5** depicts an example processing system with which aspects of the present disclosure can be performed.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for automating and enhancing experimentation processes.

"Experimentation" refers to the process of performing an action and monitoring a result of the action to determine whether a particular effect of the action is observed. For example, a set of different treatments may be applied to a set of targets (such as to different cohorts among the set of targets). One application of experimentation is identifying challenges faced by customers and determining the most effective solutions to address these issues. Despite advancements in tooling and infrastructure to facilitate large-scale experimentation, a substantial portion of the experimentation process remains manual. This manual effort involves determining the treatments to test in an experiment, selecting cohorts to which to apply the treatments, configuring application of the treatments, modifying these treatments based on the results of previous experiments, and so on. Technical problems with the generation and administration of large-scale experiments include failure to properly configure application of treatments, as well as delay and unresponsiveness of treatment application due to the number of treatments and/or cohorts to be applied. Furthermore, traditional (e.g., manual) approaches for configuration of experimentation may be unresponsive to trends in results of the experimentation. For example, adapting the treatments or cohorts of an ongoing experiment in a manual fashion may introduce error and delay. This is particularly impactful when adapting an ongoing experiment in view of results of the experiment.

Techniques described herein overcome the aforementioned technical problems and address the aforementioned challenges of configuring and performing the end-to-end experimentation process. These techniques provide a large language model (LLM) agent that can select and interact with tools designed for various purposes which may be related to configuring, executing, and/or analyzing an experiment. For example, these tools may perform different types of experiments, configure treatments based on user experience parameters, analyze both quantitative and qualitative data, and segment target populations (e.g., into cohorts) by different attributes. The LLM agent orchestrates the entire experimentation process, from identifying initial experiments to iterating on treatments and cohort allocations until the optimal solution is found.

By utilizing an LLM agent to automate the identification and configuration of tools to apply treatments to targets, the need for manual intervention is reduced, thereby providing the technical benefit of accelerating the experimentation process and reducing the occurrence of misconfiguration, sub-optimal configuration, or the like.

The LLM agent can identify appropriate tools from a plurality of available tools. This identification is based on the descriptions of the tools, ensuring that the most suitable tools are selected for configuring treatments, selecting targets, and allocating treatments to targets (among other examples). This systematic approach enhances the efficiency and accuracy of the experimentation process. Furthermore, in some examples, a description of a tool may provide instructions for interacting with an application programming interface (API) of the tool. The LLM agent can use these instructions to interact with the tool. For example, the LLM agent may configure a tool to divide targets into segments, apply a treatment to a set of targets, analyze a result, or the like. This automation of API input generation and provision to the tools streamlines the workflow and eliminates or reduces human involvement, reducing the complexity and time involved in setting up experiments. For example, a tool may generate computer code to implement one or more treatments in accordance with an API input, thereby reducing the time and effort needed to set up and execute experiments, which accelerates the experimentation process. Furthermore, the ability of the tool to generate computer code based on the API input ensures that the treatments are applied consistently and accurately. This leads to more reliable and reproducible experimental results, enhancing the overall quality and validity of the experimentation process.

The LLM agent also enables an iterative approach to experimentation. For example, the parameters of an experiment, such as treatments, segmentation of targets into cohorts, or allocation of treatments to cohorts, may be adjusted based on results or feedback of the experiment. This iterative process ensures that the system can refine and optimize the treatments based on initial results, thereby improving the accuracy and effectiveness of the treatments applied to the targets.

Determining that the initial result fails to satisfy the condition and subsequently generating the first set of API inputs based on this failure enables the system to dynamically adjust (e.g., fine-tune) and reconfigure the treatments. This reduces the need for manual intervention and accelerates the experimentation process, leading to faster identification of satisfactory (e.g., optimal) solutions.

### Example System Implementing a Language Model

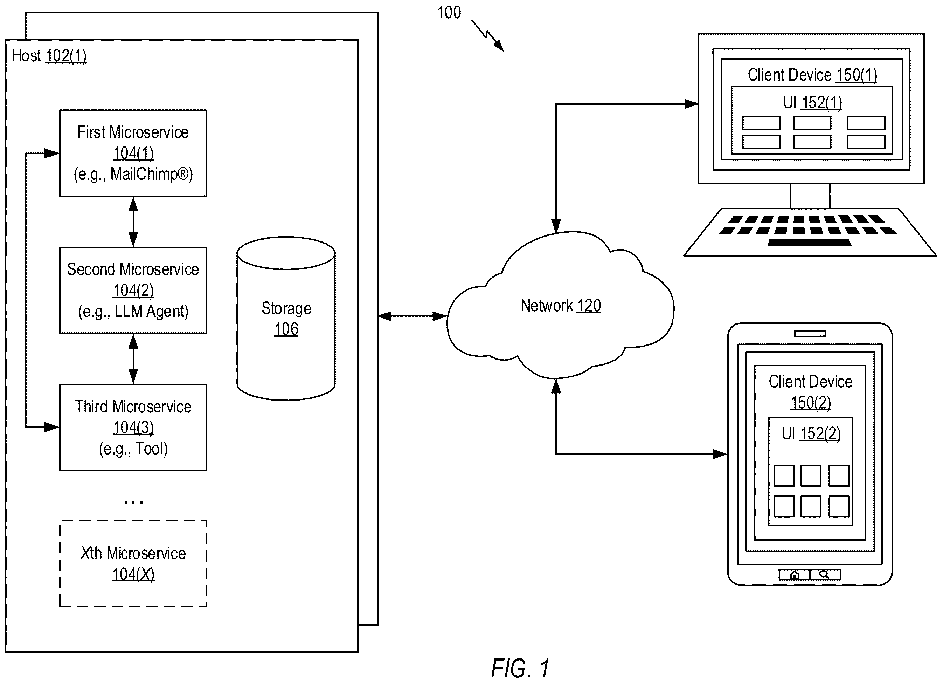

**FIG. 1** depicts an example system 100 supporting a plurality of microservices 104 (e.g., software-defined service, which in some cases, may be cloud-native). As shown in **FIG. 1****,** system 100 comprises client devices 150(1)-(2) (collectively referred to herein as "client devices 150") and host(s) 102 interconnected through a network 120. Network 120 may be, for example, a direct link, a local area network (LAN), a wide area network (WAN), such as the Internet, another type of network, or a combination of one or more of these networks.

Host(s) 102 may be geographically co-located servers on the same rack or on different racks in any arbitrary location in a data center. Host(s) 102 may be constructed on a server grade hardware platform and include components of a computing device such as, one or more processors (central processing units (CPUs)), one or more memories (random access memory (RAM)), one or more network interfaces (e.g., physical network interfaces (PNICs)), storage 106, and other components (e.g., only storage 106 is shown in **FIG. 1****).**

A first host 102(1) in system 100 may host a plurality of microservices 104(1)-(X) (collectively referred to herein as "microservices 104"), where X is an integer greater than one. The microservices 104 may be deployed using virtual machines (VMs) and/or container(s) running on first host 102(1) (e.g., where first host 102(1) is running a hypervisor (not shown) used to abstract processor, memory, storage, and networking resources of first host 102(1)'s hardware platform). Generally, microservices 104 are loosely coupled and independently deployable services (or software) that may make up an application. Microservices 104 may enable segmented, granular level functionalities within a larger system infrastructure.

Client device 150(1) and client device 150(2) may each include a user interface (UI) 152(1), 152(2), respectively, which may be used to communicate with, at least, a first microservice 104(1), a second microservice 104(2), and/or through an X-th microservice 104(*X*) using the network 120. For example, communication between client devices 150 and a microservice 104 may be facilitated by one or more application programming interfaces (APIs). Examples of client devices 150 may include a smartphone, a personal computer, a tablet, a laptop computer, and/or other devices.

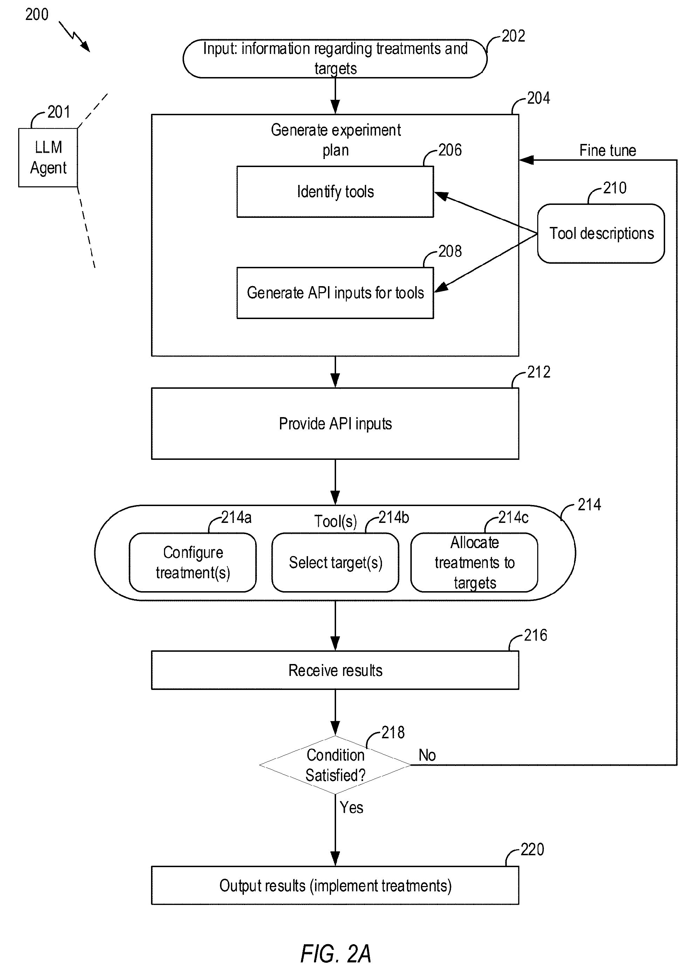

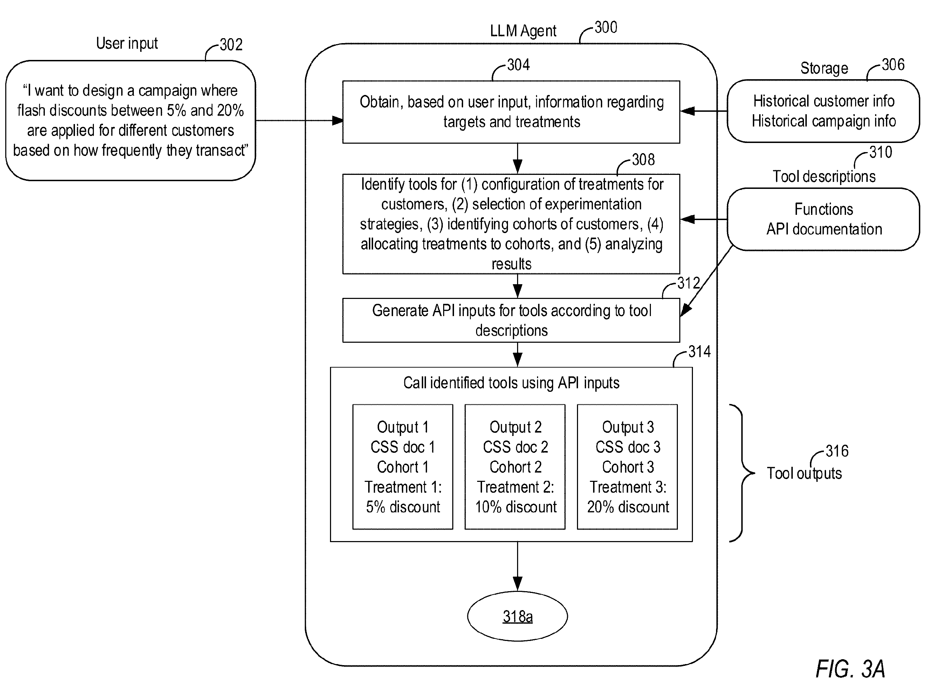

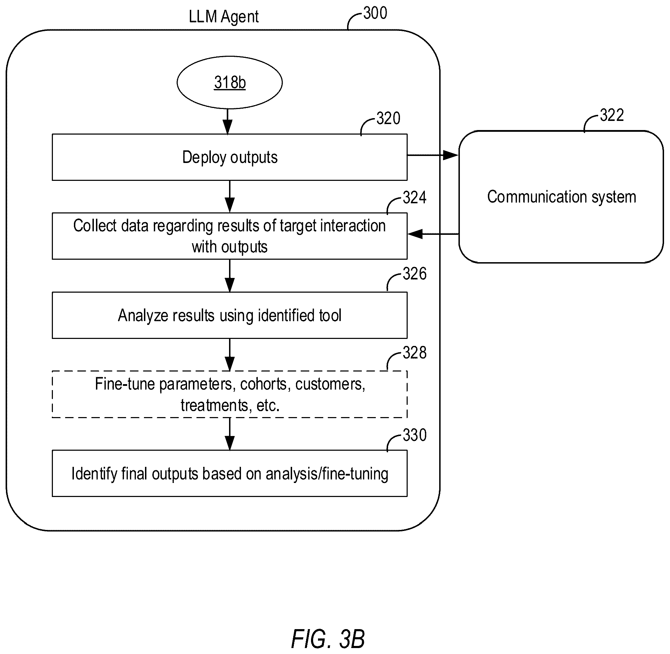

As shown in **FIG. 1****,** in certain embodiments, the first microservice 104(1) implements an information service, which is any network 120 accessible service that maintains financial data, medical data, personal identification data, and/or other data types. For example, the information service may include MailChimp^{®} and its variants made commercially available by Intuit^{®} of Mountain View, California. In certain embodiments, the second microservice 104(2) implements one or more language models, such as within or in association with an LLM agent. Second microservice 104(2) may implement language model(s) to provide responses to user prompts, including responses such as answers, advice, and/or help with the preparation of documents and/or reports. The language model(s) provide functionality for the LLM agent to implement experimentation, as described with regard to **FIGs. 2A-2D** and **3.** A third microservice 104(3) may implement a tool (e.g., tool 214), as described below.

Though **FIG. 1** depicts each of first host 102(1), storage 106, client device 150(1), and client device 150(2) as single devices for ease of illustration, first host 102(1), storage 106, client device 150(1), and/or client device 150(2) may be embodied in different forms for different implementations. Further, though **FIG. 1** depicts only two hosts 102 and two client devices 150, other embodiments may include more or less hosts 102 and/or client devices 150, and client devices 150 may use any combination of microservices 104 on any host 102 where microservices 104 are deployed.

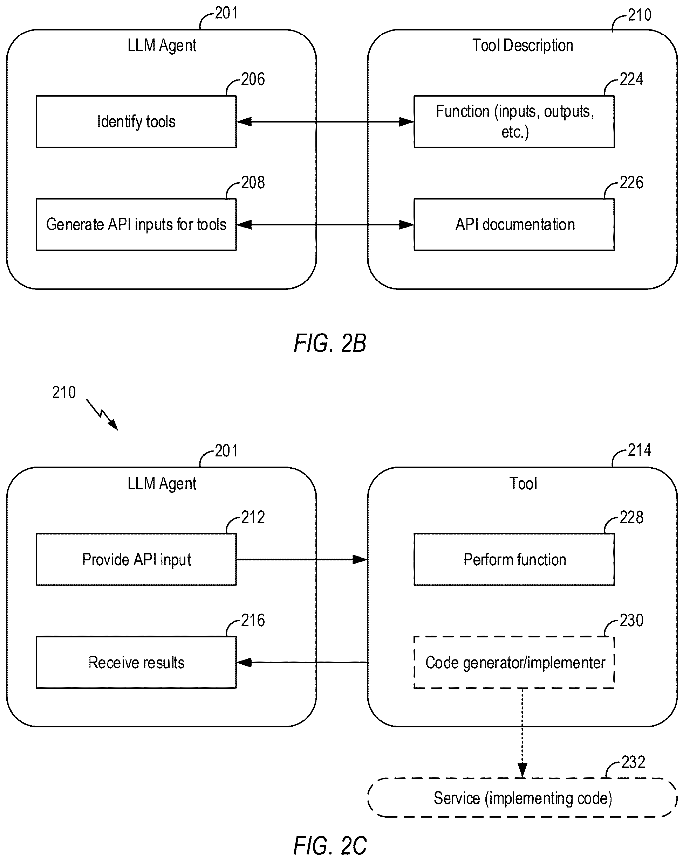

**FIG. 2A** is a diagram illustrating an example 200 of an experimentation process by an LLM agent 201. **FIGs. 2B-2D** provide further description of aspects of the example 200.

An LLM agent 201 includes a trainable algorithm that leverages large language models (LLMs) to perform tasks autonomously by calling APIs, setting up tasks, accessing results, summarizing outcomes, and/or making decisions (e.g., on behalf of a user). An LLM agent 201 interprets natural language prompts, as well as structured and/or unstructured data. An LLM agent 201 can execute a sequence of actions to achieve specified goals, for example, to configure, conduct, and/or analyze experiments.

The usage of an LLM agent to perform operations described herein may provide several technical advantages. For example, LLM agents may facilitate input and interaction via natural language, enabling efficient interaction with other systems (such as tools) that would otherwise consume a larger amount of processing, memory, and power resources. As another example, LLM agents may take advantage of context of input information, enabling informed decision-making and improving accuracy of outputs, thereby reducing latency and processing resource consumption. Furthermore, LLM agents improve scalability, implementing processes and tool interactions with limited or no human involvement, thereby reducing delay and turnaround time associated with implementing or updating an experiment.

At step 202, the LLM agent 201 receives input information. The input information can include user input, gathered stored information regarding possible treatments, targets for the treatments, or the like.

In some aspects, the input information includes a natural language input. For example, the LLM agent 201 may provide or receive input from a chat functionality that enables a user to provide natural language input. The natural language input may relate to a set of possible treatments and/or targets for the treatments. For example, the LLM agent 201 may receive natural language input that provides one or more ideas for treatments and identifies a cohort for the treatments, a timing for the treatments, a desired outcome, or the like. In some other aspects, the input information may include structured information, such as stored information regarding available treatments, targets, or the like.

In some aspects, the natural language input includes a user input. The user input may include a natural language description of an experiment's objectives, such as the specific treatments to be tested, the target customer segments, and the desired outcomes or success metrics. In some aspects, the user input may specify parameters for the treatments, such as discount rates, visual elements, or other variables to be manipulated. The user input could also include constraints or conditions that must be met, such as budget limits, timeframes, or specific customer attributes. The user input might further detail any historical data or previous experiment results to be considered, as well as any specific tools or methodologies preferred for the experiment. By providing this information, the user enables the LLM agent to accurately configure and execute the experiment, ensuring that the experiment aligns with the intended goals and parameters.

In some aspects, the input information includes stored information, such as historical information regarding targets and/or treatments. For example, the LLM agent 201 identifies which information regarding targets and treatments to obtain by parsing the initial user input to extract relevant details about the experiment's objectives, treatments, and target segments. The LLM agent 201 may use contextual analysis to understand relationships between these elements and references historical data and previous experiment results to inform decisions. The LLM agent 201 consults tool descriptions to understand their capabilities and formulates specific queries to retrieve the information.

In some aspects, the input information indicates a filter for selection of targets. A filter indicates a criterion based on which a target can be selected or not selected. For example, a filter may include a time filter (e.g., all targets who have interacted in the last six months), a demographic filter (e.g., targets between the age of 25 and 36), a location filter, a filter based on historical actions (e.g., targets who have purchased a particular product), or the like. A tool 214 may identify targets according to the indicated filter.

A "target" is a specific entity, group, or segment of entities or subjects to which a particular treatment is applied during an experiment. In some examples, a target may be a customer. Targets are identified based on various attributes, such as demographic information, behavioral patterns, or other relevant criteria, to ensure that the treatments are tested on appropriate and representative samples. A "treatment" refers to a specific condition, variation, or intervention applied to a target. Treatments may be designed to test different configurations or modifications, such as changes in pricing, visual elements, user interface adjustments, or promotional offers, to evaluate their impact on the target's behavior or responses.

At step 204, the LLM agent 201 generates an experiment plan. As part of generating the experiment plan, the LLM agent 201 identifies appropriate tools from a plurality of available tools at step 206 according to a set of tool descriptions 210. The LLM agent 201 also generates API inputs for these tools at 208 according to a set of tool descriptions 210. These operations are described in more detail in connection with **FIG. 2B****.**

At step 212, the LLM agent 201 provides the generated API inputs to the identified tools 214. The tools 214 include tools to configure treatments (tool 214a), select targets for the experiment (tool 214b), and allocate treatments to the selected targets (tool 214c). This automation of API input generation and provision to the tools streamlines the workflow, reducing the complexity and time involved in setting up experiments.

In some aspects, at least part of step 212 may be included in generating the experiment plan at step 204. For example, the configuration of treatments, selection of targets, and allocation of treatments to selected targets may occur as part of identifying the tools 214. As another example, the LLM agent 201 may interact with tools 214a, 214b, and 214c to identify appropriate treatments, targets, and allocations, and may interact with other tools 214 to implement the treatments with regard to the targets. For example, the LLM agent 201 may interact with a tool 214 that performs statistical analysis on results obtained using the tools 214, a tool 214 that receives and parses unstructured feedback, or the like.

In some aspects, a tool 214 is capable of generating or implementing computer code. For example, a tool 214 may make changes to a code base. In some aspects, the LLM agent 201 or a tool 214 may identify parameters that can be varied by computer code generated by the tool 214. The LLM agent 201 may provide an input, to the tool 214 (e.g., an API input), that indicates one or more selected parameters. The tool 214 may generate computer code according to the one or more selected parameters. For example, the one or more selected parameters may indicate a color scheme for a communication to a target, and the computer code may include cascading style sheet (CSS) code. CSS is a stylesheet language used for describing the presentation of a document written in HTML or XML. CSS defines how elements should be rendered on screen, on paper, in speech, or on other media, allowing for the separation of content from design. This enables the tool 214 to control the layout, colors, fonts, and overall visual appearance of web pages and user interfaces in a consistent and efficient manner. As another example, the one or more selected parameters may define a set of targets, and the computer code may include a structured query language (SQL) query to obtain information regarding the set of targets. SQL is a standardized programming language used for managing and manipulating relational databases. SQL allows users to perform various operations such as querying data, updating records, creating and modifying database structures, and controlling access to the data.

In some aspects, a tool 214 is configured with a set of constraints. The set of constraints may provide for compliance with limitations on actions of a tool 214. For example, a set of constraints may indicate acceptable stylistic parameters (e.g., color combinations, communication style, etc.), a constraint on SQL query size or parameters, a constraint on whether a particular communication can be sent to a particular target or set of targets, or the like. In some aspects, the set of constraints may be applied at a tool 214. For example, the tool 214 may be configured not to generate an output that violates the set of constraints. In some other aspects, the set of constraints may be applied at the LLM agent. For example a tool description 210 may indicate the set of constraints, and the LLM agent may provide API inputs, to the tool 214, that conform to the set of constraints. In some aspects, the tool 214 may identify valid possibilities for an output of the tool 214, and the LLM agent may select an appropriate possibility from the valid possibilities.

Tool 214a may configure a treatment. For example, tool 214a may receive an API input that indicates a treatment selected by the LLM agent. Tool 214a may output information that configures the treatment. For example, tool 214a may generate computer code that implements the treatment. In some aspects, tool 214a configures a treatment by processing API inputs generated by the LLM agent 201. These API inputs may specify desired parameters for the treatment, such as discount rates, visual elements, or user interface modifications. Upon receiving these API inputs, the tool 214a applies the specified configurations, adjusting elements like discount rates or modifying CSS code to implement the configurations. In some examples, the tool 214a may validate the configurations to ensure the configurations meet constraints and do not introduce errors. Tool 214a generates the outputs, such as updated CSS documents or treatment details, for deployment.

Tool 214b may select targets for a treatment. For example, tool 214b may receive an API input that indicates parameters for a set of targets, and may identify the set of targets. Tool 214b may identify the set of targets according to the input information. For example, tool 214b may query a database to identify the set of targets, where the database stores the input information. In some aspects, tool 214b may divide the set of targets into a plurality of cohorts. Each cohort of the plurality of cohorts may be associated with a respective treatment (e.g., a respective configuration of the treatment). For example, a first cohort may be associated with a first discount percentage, a second cohort may be associated with a second discount percentage, and so on. In such examples, tool 214b may select targets for each cohort based on information provided by the LLM agent. For example, the LLM agent may receive an input that indicates a set of treatments, and may request that tool 214b identify an appropriate cohort for each treatment of the set of treatments (e.g., according to a set of parameters that indicate properties for the appropriate cohort). Tool 214b may identify the appropriate cohort according to the request.

Tool 214c allocates treatments to targets. For example, tool 214c may allocate treatments, configured by tool 214a, to be applied to respective cohorts of targets identified by tool 214b. In some aspects, tool 214c may apply a first treatment to be applied to a first cohort, a second treatment to be applied to a second cohort, and so on. In some aspects, tool 214c may allocate these treatments according to an API input at step 212. For example, the API input may indicate a number of cohorts, properties of each cohort, targets included in each cohort, and/or treatments to be allocated to each cohort. Tool 214c may allocate the treatments according to the number of cohorts, the properties, the targets, and/or the treatments.

In some aspects, a tool 214 is or includes an LLM agent. For example, the LLM agent 201 may interact with another LLM agent that implements a tool 214. This may reduce processor resource consumption associated with identifying API inputs for a tool 214, since interactions between LLM agents may be performed in natural language or in the form of unstructured information.

In some aspects, a tool 214 is associated with a hardware function. For example, the tool 214 may provide control over or access to a hardware function, such as a loudspeaker, a display screen, or the like. By interacting with such a tool 214, the LLM agent 201 can cause content to be provided via the hardware function or other actions to be performed by the hardware function. For example, the LLM agent 201 may cause a treatment to be provided via the hardware function to a target or set of targets.

At step 216, the LLM agent receives results from the tools. A result may include information that indicates a reaction of a target to a treatment configured for the target. For example, a result may include information indicating whether a target clicked on a link in a communication, whether a target purchased a product associated with a communication, a click-through rate, a cost per mille, feedback regarding a treatment or communication, or the like. In some aspects, the result may be specific to the target. For example, the result may indicate which target provided the result, or may indicate the target or cohort to which the result pertains.

In some aspects, the LLM agent 201 receives unstructured information in one or more modalities, such as text (e.g., via qualitative feedback from customers), images or videos (e.g., a screenshot or video feed of targets interacting with a communication), or the like. For example, the LLM agent 201 may provide a treatment comprising a financial insight for display to a target. The target may return a comment on the treatment. The LLM agent 201 may interact with one or more tools (which may include one or more LLM agents) to analyze this feedback and provide analytic information (e.g., sentiment analysis, statistical inferences, etc.). The result is based on analyzing the feedback. For example, the result may indicate a sentiment of the target based on the treatment, a conclusion based on statistical analysis of unstructured information from multiple targets, or the like.

Step 218 illustrates an iterative approach wherein the LLM agent 201 adjusts (e.g., fine-tunes) the experiment plan if the result fails to satisfy a condition. The condition, for example, may be a threshold associated with result, such as a threshold associated with a reaction to a treatment (e.g., a threshold click-through rate, a threshold cost per mille, a threshold for purchases of a product based on a communication). If the result fails to satisfy the condition, the LLM agent 201 may modify the experiment plan generated at step 204. For example, the LLM agent 201 may modify a set of treatments. As another example, the LLM agent 201 may modify a set of targets (e.g., selected targets, division of targets into cohorts). As another example, the LLM agent 201 may modify an allocation of treatments to targets. This iterative process ensures that the system can refine and optimize the treatments based on initial results, thereby improving the accuracy and effectiveness of the treatments applied to the targets. It should also be noted that this iterative process can be applied between the LLM agent 201 and a tool 214. For example, the LLM agent 201 may receive an output from a tool 214, analyze the output (or provide the output to another tool 214 for analysis) and adjust the experiment plan or an input to the tool 214 based on analyzing the output.

At step 220, the LLM agent 201 outputs information, such as a final result implementing the treatments, based on the result satisfying the condition. For example, the LLM agent 201 may configure a communication service to provide communications in accordance with the condition being satisfied. In some aspects, steps 212, 216, and 218 may be performed for a test group of targets. Upon generating an experiment plan that satisfies the condition, the LLM agent 201 may cause a tool 214 or communication service to provide communications in accordance with treatments and/or targets of the experiment plan. In some aspects, the LLM agent 201 may provide the results or parameters of the experiment plan. For example, the LLM agent 201 may generate a summary of the results and/or the experiment plan, and may provide the summary to a user.

**FIG. 2B** shows an LLM agent 201 interacting with a tool description 210 to identify tools and generate API inputs for the tools. The LLM agent 201 includes a component to identify tools (e.g., tools 214) at step 206 and a component to generate API inputs for tools at a step 208. A tool description 210 provides information 224 about the function of the tools, including inputs, outputs, and other relevant details. For example, the information 224 may indicate that a tool 214a is capable of configuring a treatment based on an input that indicates parameters of the treatment, that a tool 214b is capable of identifying and/or segmenting targets for a treatment based on an input that indicates parameters for the identifying and/or segmenting, or that a tool 214c is capable of allocating treatments to targets based on an input that indicates parameters for allocating the treatments to the targets.

In some aspects, a tool description 210 also provides API documentation 226. The API documentation 226 includes information that indicates formatting and content of API calls, endpoints, request parameters, response formats, authentication methods, error handling, or the like. For example, the API documentation includes example requests and responses, descriptions of rate limits, versioning information, and links to SDKs and libraries, ensuring that the LLM agent can accurately generate API inputs and execute tasks with minimal human intervention. By leveraging detailed API documentation, the LLM agent can automate the entire experimentation process, from configuring treatments and selecting targets to analyzing results and iterating on treatments, thereby enhancing the efficiency, scalability, and reliability of the experimentation efforts.

The LLM agent 201 identifies tools at step 206 based on the information provided in the tool description 210. Once the LLM agent 201 identifies the appropriate tools, the LLM agent 201 generates at 208 API inputs for the tools 210. The API inputs are generated according to the descriptions provided in the tool description 210, ensuring that the inputs are compatible with the tools' functions and requirements. The generated API inputs are then used to interact with the tools, facilitating the execution of various tasks and processes, for example, at 212.

**FIG. 2C** shows the LLM agent 201 providing API input to a tool 214 (as described at step 212) and receiving results from the tool 214 (as described at step 216). The tool 214 performs the function at step 228 based on the provided API input. In some embodiments, the tool 214 may include a code generator/implementer 230 that generates and implements code as part of the function. The LLM agent 201 provides the API input to the tool 214. The tool 214 performs the designated function at 228.

As mentioned, in some aspects, a tool 214 may generate computer code. If the tool 214 includes a code generator/implementer 230, the tool 214 (e.g., code generator/implementer 230) generates the computer code and sends the computer code to a service 232 for implementation. The service 232 executes the code and returns the results to the tool 214 or the LLM agent 201 for further analysis and iteration. For example, the service 232 may provide information regarding targets, a result of a communication with a target, or the like. The tool 214 then sends the results back to the LLM agent 201, which receives the results at step 216 and processes the results as described above. This automation of code generation reduces the need for manual intervention by software engineers, thereby accelerating the experimentation process and minimizing the risk of human error.

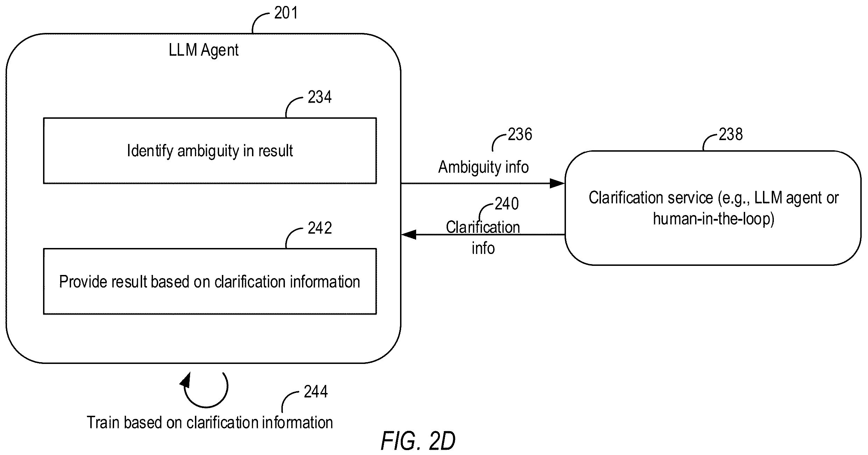

**FIG. 2D** shows a system for resolving ambiguity in a result using a clarification service.

At 234, the LLM agent 201 may identify an ambiguity in a result. The result may include a result received via a user input (e.g., a user input to the LLM agent 201 in connection with setting up an experiment or feedback regarding a treatment or communication), a result generated by a tool 214, multimodal information, or a combination thereof. The LLM agent 201 identifies ambiguity using one or more of mechanisms, such as detecting inconsistent or conflicting information, analyzing input data for vague or unclear instructions, evaluating uncertain or incomplete results, or using natural language processing techniques to recognize ambiguous language constructs. Additionally, the LLM agent 201 can incorporate user feedback to learn from patterns of requested clarifications and employ ML models trained on datasets of known ambiguities. By leveraging these techniques, the LLM agent 201 can effectively flag ambiguities in input data and results, enabling the LLM agent 201 to seek clarification and enhance the accuracy and reliability of the experimentation process.

Upon identifying an ambiguity, the LLM agent 201 generates ambiguity information 236. The ambiguity information may include a description of the ambiguity, relevant contextual information, a source of the ambiguity, one or more questions regarding the ambiguity, one or more potential interpretations, an impact assessment, suggested clarifications, any relevant historical data, or the like. The LLM agent 201 sends the ambiguity information to a clarification service 238. In some aspects, the clarification service 238 is based on an AI model. For example, the clarification service 238 may be an LLM agent. In some aspects, the clarification service 238 is a human-in-the-loop service, which provides the ambiguity information to a human operator and obtains clarification information from the human operator. The human operator may be a user that provided information associated with the ambiguity information or an expert who can resolve the ambiguity. The clarification service 238 processes the ambiguity information 236 and provides clarification information 240 to the LLM agent 201 based on the ambiguity information 236. The clarification information 240 may include a resolution of the ambiguity, additional contextual information, answers to one or more questions, updated or corrected data, or the like. In some aspects, the clarification information 240 may include references to relevant sources and recommendations for avoiding similar ambiguities in the future, ensuring the LLM agent can proceed with accurate and reliable data.

Upon receiving the clarification information 240, at step 242, the LLM agent 201 provides the result based on the clarification information 240. This ensures that the results are accurate and any ambiguities are resolved effectively. Additionally, at step 244, the LLM agent 201 may train itself or be trained based on the clarification information 240. For example, the LLM agent 201 uses the clarification information 240 to update the LLM agent 201's knowledge base, adjust its machine learning models, or recognize patterns in the types of ambiguities encountered. This may involve integrating the resolved ambiguities and their rationales into the LLM agent 201's knowledge base, fine-tuning model parameters, and/or establishing a feedback loop for continuous refinement. By learning from the provided clarification information 240 and using the clarification information 240 as training examples, the LLM agent 201 enhances its ability to detect, understand, and resolve similar issues more efficiently, leading to more accurate and reliable outcomes in the experimentation process.

**FIG. 3A** shows a method for designing an experiment using an LLM agent 300. The LLM agent 300 may be an example of LLM agent 201.

At step 302, the LLM agent 300 receives user input. The user input indicates a range of treatments and a set of targets. Here, the user input requests for the LLM agent 300 to design a campaign where flash discounts between 5% and 20% are applied for different customers based on how frequently the customers perform transactions. These flash discounts are treatments, and these customers are targets.

At step 304, the LLM agent 300 obtains information regarding targets and treatments based on the user input. This information is obtained by the LLM agent from various sources, including historical customer information and historical campaign information stored in storage 306 (e.g., storage 106). The obtained information may indicate past discounts applied to customers, past customers for which discounts were applied, reactions to such discounts, transaction histories of customers, or the like. This is described in more detail in connection with **FIG. 2A****.**

At step 308, the LLM agent 300 identifies tools for the configuration of treatments for customers, selection of experimentation strategies, identifying cohorts of customers, allocating treatments to cohorts, and analyzing results. This step involves processing the obtained information to determine the appropriate tools and strategies for the campaign. For example, the LLM agent identifies tools for the configuration of treatments, selection of experimentation strategies, identifying cohorts of customers, allocating treatments to cohorts, and analyzing results, using tool descriptions 310 (which may be an example of tool descriptions 210) as described in connection with step 206 of **FIGs. 2A** and **2B****.**

At step 312, the LLM agent 300 generates API inputs for the identified tools according to the tool descriptions 310, as described in connection with step 208 of **FIG. 2A****.**

At step 314, the LLM agent 300 calls the identified tools using the generated API inputs, as described at step 212 of **FIG. 2A****.** The tools produce various outputs 316, including CSS documents, cohort information, and treatment details. For example, Output 1 includes CSS document 1, Cohort 1, and a 5% discount treatment; Output 2 includes CSS document 2, Cohort 2, and a 10% discount treatment; and Output 3 includes CSS document 3, Cohort 3, and a 20% discount treatment. These outputs 316 include CSS documents that define visual presentation and styling of the treatments. Cohort information indicates groups of targets (e.g., customers) targeted by each treatment, allowing for precise segmentation and allocation of treatments based on customer attributes. Treatment information indicates the specific interventions or variations applied to each cohort, such as different discount rates or promotional offers. For example, Output 1 includes CSS document 1, which styles the user interface for Cohort 1, and applies a 5% discount treatment to this group. Similarly, Output 2 includes CSS document 2 for Cohort 2, with a 10% discount treatment, and Output 3 includes CSS document 3 for Cohort 3, with a 20% discount treatment. These outputs enable the LLM agent 300 to implement the experiment accurately, monitor the effects of different treatments on various customer segments, and analyze the results to determine the most effective strategies.

Reference number 318a in **FIG. 3A** indicates to proceed to **FIG. 3B****.** At reference number 318b of **FIG. 3B****,** description of the method is continued.

At step 320, the LLM agent 300 deploys outputs 316. These outputs 316 are sent to the communication system 322 for further processing or interaction with targets. The communication system 322 further processes the outputs 316 or facilitates interaction with the designated targets based on the outputs 316. The communication system 322 may handle tasks such as delivering personalized content to targets (e.g., customers), tracking interactions with the treatments, and/or collecting data on the effectiveness of the treatments.

At step 324, the LLM agent 300 or a tool associated with the LLM agent 300 collects data regarding the results of target interaction with the deployed outputs. The collected data may include various metrics such as click-through rates, conversion rates, user engagement levels, or feedback from targets. Additionally or alternatively, the data can include qualitative information, such as customer comments or reviews, which provide insights into user experiences and perceptions. The LLM agent 300 or the associated tool gathers this data from multiple sources, such as web analytics, customer databases, or interaction logs. This collected data is used for subsequent analysis and decision-making, enabling the LLM agent 300 to refine and optimize the experiment based on empirical evidence.

At step 326, the LLM agent 300 analyzes the collected results using an identified tool. This analysis helps in understanding the effectiveness and impact of the deployed outputs. These analyses include statistical tests to determine significance, descriptive statistics to summarize data, comparative analysis to identify the best-performing treatments across cohorts, or the like. Trend analysis helps understand changes over time, while sentiment analysis gauges customer satisfaction from qualitative feedback. The LLM agent may also conduct split testing (also referred to as A/B testing) to compare treatment versions, regression analysis to identify relationships between variables, clustering analysis to segment customers, or anomaly detection to ensure data accuracy.

At step 328, the LLM agent 300 fine-tunes parameters, cohorts, customers, treatments, etc., based on the analysis. This step involves adjusting various factors to optimize the performance of the outputs, as described in connection with **FIG. 2A** at 218.

At step 330, the LLM agent 300 identifies a final output based on the analysis and fine-tuning performed in the previous steps. For example, the LLM agent 300 may identify the final output according to a condition, as described at 218 of **FIG. 2A****.** As another example, the LLM agent 300 may identify the final output according to a user input (e.g., a user may approve the final output). In some aspects, the LLM agent 300 may provide or trigger a set of communications based on the final output.

### Example Method for Designing Experimentation using an LLM Agent

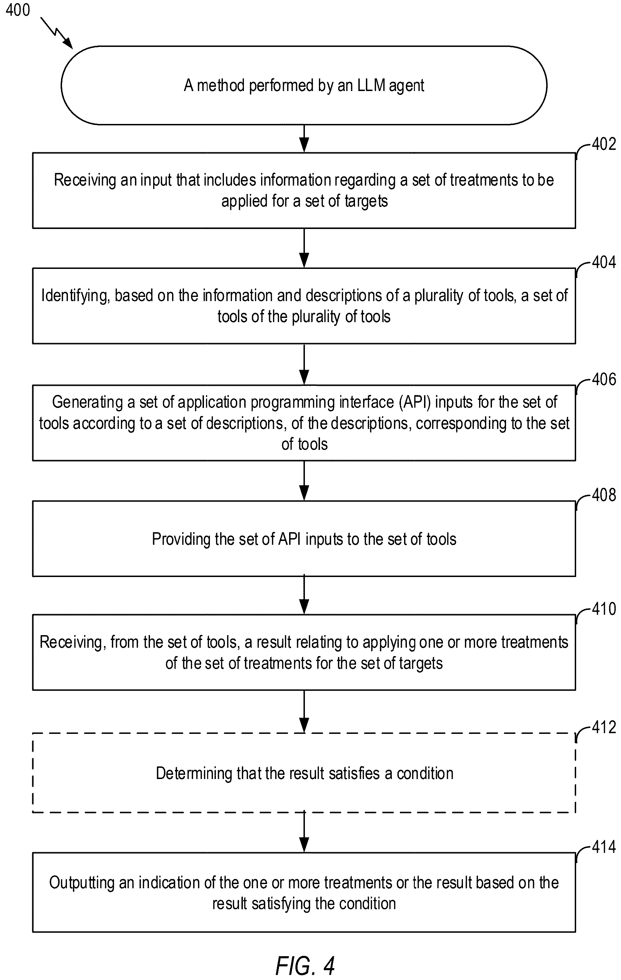

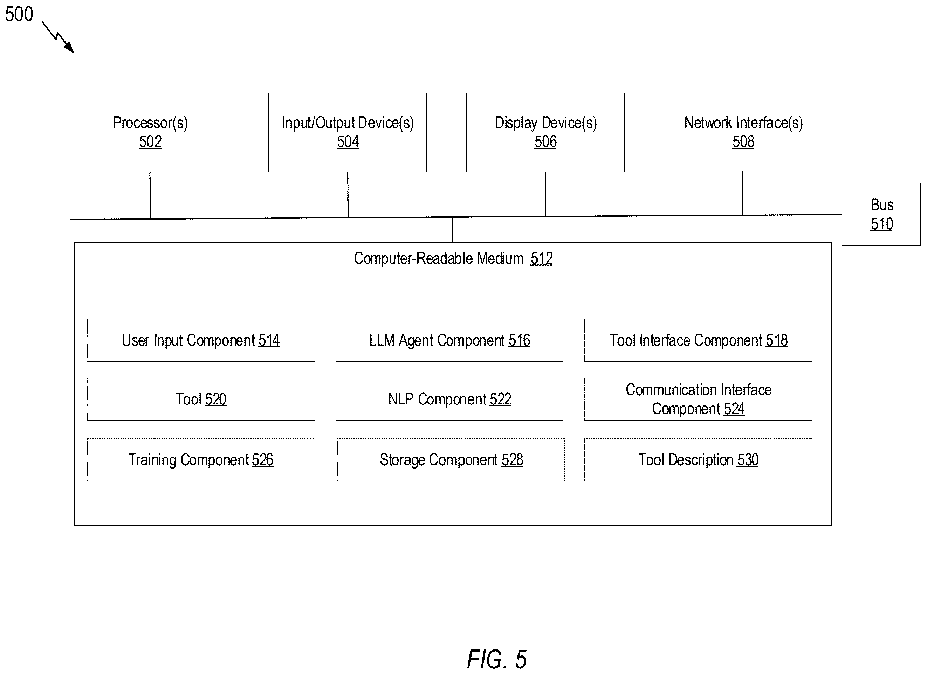

**FIG. 4** depicts an example method 400 for designing experimentation using an LLM agent. In one aspect, method 400 can be implemented by a microservice 104 of FIG. 1, an LLM agent 201 or 300 of **FIG. 2** or **3****,** and/or processing system 500 of **FIG. 5****.**

At step 402, the method 400 includes receiving an input that includes information regarding a set of treatments to be applied for a set of targets. The input may include, for example, input information received at step 202, the user input at 302, or the information obtained at step 304.

At step 404, the method 400 includes identifying, based on the information and descriptions of a plurality of tools, a set of tools of the plurality of tools. The plurality of tools may include tools 214. The descriptions may include tool descriptions 210 or tool descriptions 310.

At step 406, the method 400 includes generating (e.g., at step 208 or at step 312) a set of API inputs for the set of tools according to a set of descriptions, of the descriptions, corresponding to the set of tools.

At step 408, the method 400 includes providing the set of API inputs to the set of tools. This may be referred to as calling the identified tools at step 314 or providing API inputs at step 212.

At step 410, the method 400 includes receiving, from the set of tools, a result relating to applying one or more treatments of the set of treatments for the set of targets. The result may include an output 316 or a result of target interaction with an output 316, as described at step 324 and step 216.

At step 412, the method 400 optionally includes determining that the result satisfies a condition, as described at step 218 and step 328.

At step 414, the method 400 includes outputting an indication of the one or more treatments or the result based on the result satisfying the condition, as described at step 220 and step 330.

Thus, the LLM agent can select and interact with tools designed for various purposes which may be related to configuring, executing, and/or analyzing an experiment. For example, these tools may perform different types of experiments, configure treatments based on user experience parameters, analyze both quantitative and qualitative data, and segment customer target populations (e.g., into cohorts) by different attributes. By utilizing the LLM agent in method 400 to perform the identification and configuration of tools to apply treatments to targets, the need for manual intervention is reduced or eliminated, thereby providing the technical benefit of accelerating the experimentation process and reducing the occurrence of misconfiguration, sub-optimal configuration, or the like. Furthermore, by interacting with tools to divide targets into segments, apply a treatment to a set of targets, analyze a result, or the like, in method 400, workflows are streamlined and human involvement is reduced, reducing the complexity and time involved in setting up experiments.

Note that **FIG. 4** is just one example of a method, and other methods including fewer, additional, or alternative operations are possible consistent with this disclosure.

### Example Processing System for Designing Experimentation using an LLM Agent

**FIG. 5** depicts an example processing system 500 configured to perform various aspects described herein, including, for example, method 400 as described above with respect to **FIG. 4****.**

Processing system 500 is generally an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 500 includes one or more processors 502, one or more input/output devices 504, one or more display devices 506, one or more network interfaces 508 through which processing system 500 is connected to one or more networks (e.g., a local network, an intranet, the Internet, or any other group of processing systems communicatively connected to each other), and computer-readable medium 512. In the depicted example, the aforementioned components are coupled by a bus 510, which may generally be configured for data exchange amongst the components. Bus 510 may be representative of multiple buses, while only one is depicted for simplicity.

Processor(s) 502 are generally configured to retrieve and execute instructions stored in one or more memories, including local memories like computer-readable medium 512, as well as remote memories and data stores. Similarly, processor(s) 502 are configured to store application data residing in local memories like the computer-readable medium 512, as well as remote memories and data stores. More generally, bus 510 is configured to transmit programming instructions and application data among the processor(s) 502, display device(s) 506, network interface(s) 508, and/or computer-readable medium 512. In certain embodiments, processor(s) 502 are representative of a one or more central processing units (CPUs), graphics processing unit (GPUs), tensor processing unit (TPUs), accelerators, and other processing devices. It will be understood that transmission of programming instructions via the network and/or the bus enables these to be seen also as computer-readable (transmission) mediums.

Input/output device(s) 504 may include any device, mechanism, system, interactive display, and/or various other hardware and software components for communicating information between processing system 500 and a user of processing system 500. For example, input/output device(s) 504 may include input hardware, such as a keyboard, touch screen, button, microphone, speaker, and/or other device for receiving inputs from the user and sending outputs to the user.

Display device(s) 506 may generally include any sort of device configured to display data, information, graphics, user interface elements, and the like to a user. For example, display device(s) 506 may include internal and external displays such as an internal display of a tablet computer or an external display for a server computer or a projector. Display device(s) 506 may further include displays for devices, such as augmented, virtual, and/or extended reality devices. In various embodiments, display device(s) 506 may be configured to display a graphical user interface.

Network interface(s) 508 provide processing system 500 with access to external networks and thereby to external processing systems. Network interface(s) 508 can generally be any hardware and/or software capable of transmitting and/or receiving data via a wired or wireless network connection. Accordingly, network interface(s) 508 can include a communication transceiver for sending and/or receiving any wired and/or wireless communication.

Computer-readable medium 512 may be a volatile memory, such as a random access memory (RAM), or a nonvolatile memory, such as nonvolatile random access memory (NVRAM), or the like. In this example, computer-readable medium 512 includes user input component 514, LLM Agent Component 516, tool interface component 518, tool 520, NLP component 522, communication interface component 524, training component 526, storage component 528, and tool description component 530.

In certain aspects, user input component 514 is configured to receives and process user input (such as at 202 or 302 or step 402).

In certain aspects, LLM agent component 516 implements an LLM to interpret user input, generate API inputs, and orchestrate the experimentation process. For example, LLM agent component 516 may perform functions of method 400 and/or functions described in **FIGs. 2A-2D** and **3A-3B** (such as using one or more other components described herein).

In certain aspects, tool interface component 518 facilitates communication between the LLM agent component 516 and various tools, enabling the execution of tasks and retrieval of results. For example, LLM agent component 516 may provide API inputs and receive tool outputs via tool interface component 518.

In certain aspects, tool 520 performs functions such as configuring treatments, selecting targets, and analyzing results based on the API inputs provided by the LLM agent component 516. LLM agent component 516 may also interact with tools external to the processing system 500.

In certain aspects, NLP component 522 may process natural language input and output, enabling the LLM agent to understand and generate human-like text. NLP component 522 may facilitate conversion between natural language input and structured input, or structured output and natural language output.

In certain aspects, communication interface component 524 manages the exchange of information between the processing system 500 and external entities, such as targets or tools, for example via communication system 322.

In certain aspects, training component 526 updates the LLM agent component 516 (such as models and algorithms of the LLM agent component 516) based on feedback and new data to improve performance over time.

In certain aspects, storage component 528 stores data, including user inputs, experiment configurations, results, and historical information, for use by the LLM agent component 516 and other components. Storage component 528 may be implemented using storage 106 or storage 306.

In certain aspects, tool description 530 stores and provides tool descriptions (such as tool description 210 or tool description 310) for selection and utilization of tools 520.

Note that **FIG. 5** is just one example of a processing system consistent with aspects described herein, and other processing systems having additional, alternative, or fewer components are possible consistent with this disclosure.

### Further Examples

Therefore, from one perspective there have been described approaches for a computer-implemented method that involves receiving input with information about treatments for targets. A large language model (LLM) agent identifies tools for configuring treatments, selecting targets, and allocating treatments. The LLM agent generates and provides application programming interface (API) inputs to the tools. The LLM agent receives results from the tools, determines if the results satisfy a condition, and outputs an indication based on the results. The method includes generating computer code for treatments, applying treatments, and performing statistical analysis. The system iteratively adjusts treatments, targets, or allocations until conditions are met. The system identifies ambiguities and obtains clarifications, training the LLM agent accordingly. The processing system includes memory and processors to execute instructions, receive input, identify tools, generate API inputs, provide inputs to tools, receive results, determine conditions, and output indications.

Implementation examples are described in the following numbered clauses:
Clause 1: A computer-implemented method, comprising: receiving an input that includes information regarding a set of treatments to be applied for a set of targets; identifying, by a large language model (LLM) agent and based on the information and descriptions of a plurality of tools, a set of tools of the plurality of tools, the set of tools including at least one of: a first tool associated with configuring the set of treatments, a second tool associated with selecting the set of targets, or a third tool associated with an allocation of the set of treatments to the set of targets; generating, by the LLM agent, a set of application programming interface (API) inputs for the set of tools according to a set of descriptions, of the descriptions, corresponding to the set of tools; providing, by the LLM agent, the set of API inputs to the set of tools; receiving, by the LLM agent from the set of tools, a result relating to applying one or more treatments of the set of treatments for the set of targets; determining, by the LLM agent, that the result satisfies a condition; and outputting, by the LLM agent, an indication of the one or more treatments or the result based on the result satisfying the condition.
Clause 2: The method of clause 1, further comprising generating, by the first tool and in accordance with an API input of the set of API inputs, computer code to implement the one or more treatments, wherein the result is based on the computer code.
Clause 3: The method of clause 2, wherein the computer code comprises cascading style sheet code.
Clause 4: The method of clause 2 or 3, further comprising applying the one or more treatments by implementing the computer code.
Clause 5: The method of any of clauses 1-4, wherein the information regarding the set of treatments indicates a range of treatments, and wherein the method further comprises identifying the set of treatments from within the range of treatments.
Clause 6: The method of any of clauses 1-5, wherein generating the set of API inputs further comprises generating an experiment plan indicating the set of treatments, the set of targets, and the allocation of the set of treatments to the set of targets, wherein providing the set of API inputs comprises providing the set of API inputs in accordance with the experiment plan.
Clause 7: The method of any of clauses 1-6, further comprising providing, to a user, a set of filters for selection of the set of targets, wherein generating the set of API inputs comprises generating an API input of the set of API inputs, for the second tool, in accordance with the set of filters.
Clause 8: The method of any of clauses 1-7, wherein the set of tools includes a fourth tool associated with a statistical analysis of the result, wherein determining that the result satisfies the condition comprises determining that the result satisfies the condition in accordance with the statistical analysis of the result.
Clause 9: The method of any of clauses 1-8, wherein the result is a final result, the one or more treatments are one or more first treatments, and the set of API inputs is a first set of API inputs, and wherein the method further comprises: generating a second set of API inputs to obtain an initial result relating to applying one or more second treatments of the set of treatments for the set of targets; and determining that the initial result fails to satisfy the condition, wherein generating the first set of API inputs is based on the initial result failing to satisfy the condition.
Clause 10: The method of clause 9, further comprising iteratively adjusting at least one of the one or more first treatments, the set of targets, or the allocation until the condition is satisfied.
Clause 11: The method of any of clauses 1-10, further comprising identifying an ambiguity associated with at least one of the one or more treatments, the set of targets, or the allocation; and obtaining clarification information regarding the ambiguity.
Clause 12: The method of clause 11, further comprising training an artificial intelligence or machine learning model of the LLM agent in accordance with the clarification information.
Clause 13: The method of any of clauses 1-12, wherein a tool of the set of tools is associated with a hardware function.
Clause 14: A method performed by a large language model (LLM) agent, comprising: receiving an input that includes information regarding a set of treatments to be applied for a set of targets; identifying, based on the information and descriptions of a plurality of tools, a set of tools of the plurality of tools, the set of tools including: a first tool associated with configuring the set of treatments, a second tool associated with selecting the set of targets, and a third tool associated with an allocation of the set of treatments to the set of targets; generating a set of application programming interface (API) inputs for the set of tools according to a set of descriptions, of the descriptions, corresponding to the set of tools; providing the set of API inputs to the set of tools; receiving, from the set of tools, a result relating to applying one or more treatments of the set of treatments for the set of targets; and outputting an indication of the one or more treatments or the result based on the result satisfying a condition.
Clause 15: The method of clause 14, further comprising: applying, by the set of tools and in accordance with the set of API inputs, the one or more treatments to the set of targets in accordance with the allocation.
Clause 16: The method of clause 15, wherein applying the one or more treatments to the set of target comprises applying a first treatment to a first group of targets, of the set of targets, and a second treatment to a second group of targets of the set of targets.
Clause 17: The method of clause 15 or 16, wherein the set of tools includes a fifth tool associated with processing unstructured information, and the method further comprises: receiving, by the fifth tool, the unstructured information from a target of the set of targets, the unstructured information being associated with the one or more treatments; and processing, by the fifth tool, the unstructured information, the result being based on processing the unstructured information.
Clause 18: The method of clause 15, 16 or 17, wherein the LLM agent is a first LLM agent and at least one tool of the set of tools comprises a second LLM agent.
Clause 19: The method of any of clauses 14-18, further comprising identifying an ambiguity associated with the input; and requesting, from a user associated with the user input, clarification information based on the ambiguity.
Clause 20: A method, comprising receiving an input that includes information regarding a set of treatments to be applied for a set of targets, the input comprising natural language; identifying, by a large language model (LLM) agent of the processing system and based on the information and descriptions of a plurality of tools, a set of tools of the plurality of tools, the set of tools including at least one of: a first tool associated with configuring the set of treatments, a second tool associated with selecting the set of targets, or a third tool associated with an allocation of the set of treatments to the set of targets; generating a set of application programming interface (API) inputs for the set of tools according to a set of descriptions, of the descriptions, corresponding to the set of tools; providing, by the LLM agent, the set of API inputs to the set of tools; receiving, by the LLM agent from the set of tools, a result relating to applying one or more treatments of the set of treatments for the set of targets; determining, by the LLM agent, that the result satisfies a condition; and outputting, by the LLM agent, an indication of the one or more treatments or the result based on the result satisfying the condition.
Clause 21: The method of clause 20, wherein the result is a final result, the one or more treatments are one or more first treatments, and the set of API inputs is a first set of API inputs, and wherein the method further comprises generating a second set of API inputs to obtain an initial result relating to applying one or more second treatments of the set of treatments for the set of targets; and determining that the initial result fails to satisfy the condition, wherein generating the first set of API inputs is based on the initial result failing to satisfy the condition.
Clause 22: The method of clause 21, wherein the method further comprises iteratively adjusting at least one of the one or more first treatments, the set of targets, or the allocation until the condition is satisfied.
Clause 23: The method of any of clauses 20-22, further comprising identifying an ambiguity associated with at least one of the one or more treatments, the set of targets, or the allocation; and obtaining clarification information regarding the ambiguity.
Clause 24: The method of clause 23, further comprising training an artificial intelligence or machine learning model of the LLM agent in accordance with the clarification information.
Clause 25: The method of any of clauses 20-24, wherein a tool of the set of tools is associated with a hardware function.
Clause 26: A processing system, comprising: a memory comprising computer-executable instructions; and a processor configured to execute the computer-executable instructions and cause the processing system to perform a method in accordance with any one of Clauses 1-25.
Clause 27: A processing system, comprising means for performing a method in accordance with any one of Clauses 1-25.
Clause 28: A computer-readable medium comprising program code for causing a processing system to perform the steps of any one of Clauses 1-25.
Clause 29: A computer program product embodied on a computer-readable storage medium comprising code for performing a method in accordance with any one of Clauses 1-25.
Clause 30. A computer-implemented method, comprising: receiving an input that includes information regarding a set of treatments to be applied for a set of targets; identifying, by a large language model (LLM) agent and based on the information and descriptions of a plurality of tools, a set of tools of the plurality of tools, the set of tools including at least one of: a first tool associated with configuring the set of treatments, a second tool associated with selecting the set of targets, or a third tool associated with an allocation of the set of treatments to the set of targets; generating, by the LLM agent, a set of application programming interface (API) inputs for the set of tools according to a set of descriptions, of the descriptions, corresponding to the set of tools; providing, by the LLM agent, the set of API inputs to the set of tools; receiving, by the LLM agent from the set of tools, a result relating to applying one or more treatments of the set of treatments for the set of targets; determining, by the LLM agent, that the result satisfies a condition; and outputting, by the LLM agent, an indication of the one or more treatments or the result based on the result satisfying the condition.
Clause 31. The method of clause 30, further comprising generating, by the first tool and in accordance with an API input of the set of API inputs, computer code to implement the one or more treatments, wherein the result is based on the computer code.
Clause 32. The method of clause 31, wherein the computer code comprises cascading style sheet code.
Clause 33. The method of clause 31 or 32, further comprising applying the one or more treatments by implementing the computer code.
Clause 34. The method of any of clauses 30 to 33, wherein the information regarding the set of treatments indicates a range of treatments, and wherein the method further comprises identifying the set of treatments from within the range of treatments.
Clause 35. The method of any or clauses 30 to 34, further comprising generating an experiment plan indicating the set of treatments, the set of targets, and the allocation of the set of treatments to the set of targets, wherein providing the set of API inputs comprises providing the set of API inputs in accordance with the experiment plan.
Clause 36. The method of any of clauses 30 to 35, further comprising providing, to a user, a set of filters for selection of the set of targets, wherein generating the set of API inputs comprises generating an API input of the set of API inputs, for the second tool, in accordance with the set of filters.
Clause 37. The method of any of clauses 30 to 36, wherein the set of tools includes a fourth tool associated with a statistical analysis of the result, wherein determining that the result satisfies the condition comprises determining that the result satisfies the condition in accordance with the statistical analysis of the result.
Clause 38. The method of any of clauses 30 to 37, wherein the result is a final result, the one or more treatments are one or more first treatments, and the set of API inputs is a first set of API inputs, and wherein the method further comprises: generating a second set of API inputs to obtain an initial result relating to applying one or more second treatments of the set of treatments for the set of targets; and determining that the initial result fails to satisfy the condition, wherein generating the first set of API inputs is based on the initial result failing to satisfy the condition.
Clause 39. The method of clause 38, further comprising iteratively adjusting at least one of the one or more first treatments, the set of targets, or the allocation until the condition is satisfied.
Clause 40. The method of any of clauses 30 to 39, further comprising identifying an ambiguity associated with at least one of the one or more treatments, the set of targets, or the allocation; and obtaining clarification information regarding the ambiguity.
Clause 41. The method of clause 40, further comprising training an artificial intelligence or machine learning model of the LLM agent in accordance with the clarification information.
Clause 42. The method of any of clauses 30 to 41, wherein a tool of the set of tools is associated with a hardware function.
Clause 43. A method performed by a large language model (LLM) agent, comprising: receiving an input that includes information regarding a set of treatments to be applied for a set of targets; identifying, based on the information and descriptions of a plurality of tools, a set of tools of the plurality of tools, the set of tools including: a first tool associated with configuring the set of treatments, a second tool associated with selecting the set of targets, and a third tool associated with an allocation of the set of treatments to the set of targets; generating a set of application programming interface (API) inputs for the set of tools according to a set of descriptions, of the descriptions, corresponding to the set of tools; providing the set of API inputs to the set of tools; receiving, from the set of tools, a result relating to applying one or more treatments of the set of treatments for the set of targets; and outputting an indication of the one or more treatments or the result based on the result satisfying a condition.
Clause 44. The method of clause 43, further comprising: applying, by the set of tools and in accordance with the set of API inputs, the one or more treatments to the set of targets in accordance with the allocation.
Clause 45. The method of clause 44, wherein applying the one or more treatments to the set of target comprises applying a first treatment to a first group of targets, of the set of targets, and a second treatment to a second group of targets of the set of targets.
Clause 46. A processing system, comprising: one or more memories comprising computer-executable instructions; and one or more processors configured to execute the computer-executable instructions and cause the processing system to: receive an input that includes information regarding a set of treatments to be applied for a set of targets, the input comprising natural language; identify, by a large language model (LLM) agent of the processing system and based on the information and descriptions of a plurality of tools, a set of tools of the plurality of tools, the set of tools including at least one of: a first tool associated with configuring the set of treatments, a second tool associated with selecting the set of targets, or a third tool associated with an allocation of the set of treatments to the set of targets; generate a set of application programming interface (API) inputs for the set of tools according to a set of descriptions, of the descriptions, corresponding to the set of tools; provide, by the LLM agent, the set of API inputs to the set of tools; receive, by the LLM agent from the set of tools, a result relating to applying one or more treatments of the set of treatments for the set of targets; determine, by the LLM agent, that the result satisfies a condition; and output, by the LLM agent, an indication of the one or more treatments or the result based on the result satisfying the condition.
Clause 47. The processing system of clause 46, wherein the result is a final result, the one or more treatments are one or more first treatments, and the set of API inputs is a first set of API inputs, and wherein the one or more processors are further configured to cause the processing system to: generate a second set of API inputs to obtain an initial result relating to applying one or more second treatments of the set of treatments for the set of targets; and determine that the initial result fails to satisfy the condition, wherein generating the first set of API inputs is based on the initial result failing to satisfy the condition.
Clause 48. The processing system of clause 47, wherein the one or more processors are configured to cause the processing system to iteratively adjust at least one of the one or more first treatments, the set of targets, or the allocation until the condition is satisfied.
Clause 49. The processing system of clause 46, 47 or 48, wherein a tool of the set of tools is associated with a hardware function.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As explained above, computer-implementable instructions for causing a programmable computer or programmable processor to put the described arrangements into effect bay be provided to the programmable computer or programmable processor by way of a computer readable medium. A computer-readable medium may be provided by way of a computer-readable storage medium. Such a computer-readable storage medium may be referred to as a non-transitory computer-readable medium. Examples of a computer-readable storage medium may include a CD, a DVD, a storage device, a diskette, a tape, flash memory, physical memory, or any other computer-readable storage medium. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A computer-implemented method, comprising:
receiving an input that includes information regarding a set of treatments to be applied for a set of targets;
identifying, by a large language model (LLM) agent and based on the information and descriptions of a plurality of tools, a set of tools of the plurality of tools, the set of tools including at least one of:
a first tool associated with configuring the set of treatments,
a second tool associated with selecting the set of targets, or
a third tool associated with an allocation of the set of treatments to the set of targets;
generating, by the LLM agent, a set of application programming interface (API) inputs for the set of tools according to a set of descriptions, of the descriptions, corresponding to the set of tools;
providing, by the LLM agent, the set of API inputs to the set of tools;
receiving, by the LLM agent from the set of tools, a result relating to applying one or more treatments of the set of treatments for the set of targets;
determining, by the LLM agent, that the result satisfies a condition; and
outputting, by the LLM agent, an indication of the one or more treatments or the result based on the result satisfying the condition.

2. The method of claim 1, further comprising generating, by the first tool and in accordance with an API input of the set of API inputs, computer code to implement the one or more treatments, wherein the result is based on the computer code.

3. The method of claim 2, wherein the computer code comprises cascading style sheet code.

4. The method of claim 2 or 3, further comprising applying the one or more treatments by implementing the computer code.

5. The method of any preceding claim, wherein the information regarding the set of treatments indicates a range of treatments, and wherein the method further comprises identifying the set of treatments from within the range of treatments.

6. The method of any preceding claim, further comprising generating an experiment plan indicating the set of treatments, the set of targets, and the allocation of the set of treatments to the set of targets, wherein providing the set of API inputs comprises providing the set of API inputs in accordance with the experiment plan.

7. The method of any preceding claim, further comprising providing, to a user, a set of filters for selection of the set of targets, wherein generating the set of API inputs comprises generating an API input of the set of API inputs, for the second tool, in accordance with the set of filters.

8. The method of any preceding claim, wherein the set of tools includes a fourth tool associated with a statistical analysis of the result, wherein determining that the result satisfies the condition comprises determining that the result satisfies the condition in accordance with the statistical analysis of the result.

9. The method of any preceding claim, wherein the result is a final result, the one or more treatments are one or more first treatments, and the set of API inputs is a first set of API inputs, and wherein the method further comprises:
generating a second set of API inputs to obtain an initial result relating to applying one or more second treatments of the set of treatments for the set of targets; and
determining that the initial result fails to satisfy the condition, wherein generating the first set of API inputs is based on the initial result failing to satisfy the condition;
wherein the method for example further comprises iteratively adjusting at least one of the one or more first treatments, the set of targets, or the allocation until the condition is satisfied.

10. The method of any preceding claim, further comprising identifying an ambiguity associated with at least one of the one or more treatments, the set of targets, or the allocation; and
obtaining clarification information regarding the ambiguity wherein the method for example further comprises training an artificial intelligence or machine learning model of the LLM agent in accordance with the clarification information.

11. The method of any preceding claim, wherein a tool of the set of tools is associated with a hardware function.

12. A method performed by a large language model (LLM) agent, comprising:
receiving an input that includes information regarding a set of treatments to be applied for a set of targets;
identifying, based on the information and descriptions of a plurality of tools, a set of tools of the plurality of tools, the set of tools including:
a first tool associated with configuring the set of treatments,
a second tool associated with selecting the set of targets, and
a third tool associated with an allocation of the set of treatments to the set of targets;
generating a set of application programming interface (API) inputs for the set of tools according to a set of descriptions, of the descriptions, corresponding to the set of tools;
providing the set of API inputs to the set of tools;
receiving, from the set of tools, a result relating to applying one or more treatments of the set of treatments for the set of targets; and
outputting an indication of the one or more treatments or the result based on the result satisfying a condition.

13. The method of claim 12, further comprising:
applying, by the set of tools and in accordance with the set of API inputs, the one or more treatments to the set of targets in accordance with the allocation.

14. The method of claim 13, wherein applying the one or more treatments to the set of target comprises applying a first treatment to a first group of targets, of the set of targets, and a second treatment to a second group of targets of the set of targets.

15. A processing system, comprising:
one or more memories comprising computer-executable instructions; and
one or more processors configured to execute the computer-executable instructions and cause the processing system to carry out the method of any preceding claim.
